# EUROPÄISCHE PATENTSCHRIFT

(11) **EP 3 908 543 B1**
(45) Veröffentlichungstag und Bekanntmachung des Hinweises auf die Patenterteilung: **07.06.2023**
(21) Anmeldenummer: 20700777.4
(22) Anmeldetag: 09.01.2020
(51) Int. Cl.: B65G 53/52, B65G 53/46, B01F 23/53, B01F 27/271, B01F 35/71

(54) **VERFAHREN ZUR ZUFÜHRUNG VON FESTSTOFF ZU EINER MISCHVORRICHTUNG, FESTSTOFFZUFÜHRVORRICHTUNG UND MISCHANORDNUNG**
METHOD FOR FEEDING SOLID MATERIAL TO A MIXING DEVICE, SOLID-MATERIAL FEEDING DEVICE AND MIXING ASSEMBLY
PROCÉDÉ D'ALIMENTATION EN MATIÈRES SOLIDES D'UN DISPOSITIF DE MÉLANGE, DISPOSITIF D'ALIMENTATION EN MATIÈRES SOLIDES ET DISPOSITIF DE MÉLANGE

(30) Priorität: 11.01.2019 DE 102019100619; 29.01.2019 DE 102019102183
(43) Veröffentlichungstag der Anmeldung: 17.11.2021
(73) Patentinhaber: IKA - Werke GmbH & Co. KG, 79219 Staufen (DE)
(72) Erfinder: GRIMM, Uwe, 79219 Staufen (DE); OTTE, Andreas, 79219 Staufen (DE)
(74) Vertreter: Mertzlufft-Paufler, Cornelius
(86) Internationale Anmeldenummer: PCT/EP2020/050423
(87) Internationale Veröffentlichungsnummer: WO 2020/144276

(56) Entgegenhaltungen:
- EP-A1- 1 197 260
- WO-A1-2008/098706
- DE-A1-102015 110 865
- JP-A- 2013 035 030
- US-A- 1 974 789

## Beschreibung

Die Erfindung betrifft ein Verfahren zur Zuführung von Feststoff zu einer Mischvorrichtung unter Verwendung einer Feststoffzuführvorrichtung. Ferner betrifft die Erfindung eine Feststoffzuführvorrichtung zum Zuführen von Feststoff, insbesondere von Schüttgut, wie zum Beispiel Pulver, zu einer Mischvorrichtung, wobei die Feststoffzuführvorrichtung einen Trichter zur Aufnahme von Feststoff und einen Feststoffauslass aufweist, der mit einem Feststoffeinlass einer Mischvorrichtung verbindbar ist, wobei der Feststoffauslass und der Trichter über eine Förderverbindung miteinander verbunden sind.

Die Erfindung betrifft ferner eine Mischanordnung mit zumindest einer Mischvorrichtung und zumindest einer Feststoffzuführvorrichtung sowie die Verwendung einer Feststoffzuführvorrichtung und/oder einer Mischanordnung bei einem Verfahren der eingangs genannten Art.

Feststoffzuführvorrichtungen sind aus der Praxis und auch dem druckschriftlichen Stand der Technik, so zum Beispiel aus den Druckschriften WO 2008/098 706 A1, EP 1 197 260 A1, DE 10 2015 110 865 A1, US 1 974 789 A und JP 2013 035 030 A in verschiedenen Ausführungsformen vorbekannt. Sie werden dazu verwendet, Feststoffe, beispielsweise Pulver oder Granulate, aufzunehmen und einer nachgelagerten Mischvorrichtung zuzuführen. WO2008/098706A1 offenbart den Oberbegriff von den Ansprüchen 1 und 4.

Die Mischvorrichtungen, die zusammen mit derartigen Feststoffzuführvorrichtungen in so genannten Mischanordnungen betrieben werden, sind häufig Fest-Flüssig-Mischvorrichtungen, die dazu verwendet werden, Feststoffe in eine Flüssigkeit einzubringen und möglichst gleichmäßig mit dieser zu vermischen.

Zur Feststoffaufgabe, also um die Feststoffe der Feststoffzuführvorrichtung zu übergeben, werden häufig sogenannte Sauglanzen, Sackschütten oder Big-Bag-Entleerstationen verwendet.

Mithilfe der Feststoffzuführvorrichtungen werden die Feststoffe dann den nachgelagert angeordneten Mischvorrichtungen zugeführt. Je nach Fließeigenschaften der zuzuführenden Feststoffe gelingt diese Zuführung mal besser mal schlechter. Bei gut fließenden Feststoffen oder Pulvern gelingt die Zuführung in der Regel problemlos. Es gibt aber auch andere Feststoffe, insbesondere Pulver, die schlechte Fließeigenschaften haben und ein Verstopfen der an der Zuführung beteiligten Elemente der Feststoffzuführvorrichtungen begünstigen.

Besonders problematisch ist die Zuführung schlecht fließender Pulver, Pulver, die zur Brückenbildung neigen, Pulver, die zum Kompaktieren neigen, oder auch die Zuführung stumpfer und anhaftender Pulver, wie z.B. Titandioxid.

Zum Lösen von Anhaftungen oder Brücken im Bereich des Trichters einer solchen Feststoffzuführvorrichtung ist es beispielsweise bekannt, pneumatische Klopfer oder Vibratoren einzusetzen. Mit diesen vorbekannten Maßnahmen lassen sich auch schwierigste Feststoffe derart auflockern, dass Anhaftungen und Verstopfungen im Bereich des Trichters weitgehend vermieden werden können.

Die dem Trichter nachgelagerte Förderverbindung wird von den Vibrationen und Erschütterungen, die durch solche Klopfer und Vibratoren auf den Trichter übertragen werden, in der Regel nicht erfasst. Problematisch bleibt somit die Zuführung von Feststoffen durch die Förderverbindung, die zwischen dem Trichter und dem Feststoffauslass der Feststoffzuführvorrichtung notwendig ist. Mit den bisher bekannten Konzepten können Feststoffanhaftungen innerhalb der Förderverbindung zwischen dem Trichter und dem Feststoffauslass der Feststoffzuführvorrichtungen nicht zufriedenstellend verhindert und schon gar nicht gelöst werden.

Aufgabe der Erfindung ist es daher, ein Verfahren, eine Feststoffzuführvorrichtung und eine Mischanordnung der eingangs genannten Art bereitzustellen, die die zuvor genannten Probleme vermeiden und die Zuführung von Feststoffen vereinfachen.

Zur Lösung der Aufgabe wird zunächst ein Verfahren mit den Mitteln und Merkmalen des unabhängigen, auf ein Verfahren zur Zuführung von Feststoff zu einer Mischvorrichtung gerichteten Anspruchs vorgeschlagen. Insbesondere wird zur Lösung der Aufgabe somit ein Verfahren zur Zuführung von Feststoff, beispielsweise von Schüttgut, wie Pulver, zu einer Mischvorrichtung unter Verwendung einer Feststoffzuführvorrichtung vorgeschlagen. Die Feststoffzuführvorrichtung umfasst einen Trichter zur Aufnahme von Feststoff und einen Feststoffauslass, der mit einem Feststoffeinlass der Mischvorrichtung, der der Feststoff zugeführt werden soll, verbunden ist. Der Feststoffauslass und der Trichter sind über eine Förderverbindung der Feststoffzuführvorrichtung miteinander verbunden. Der Feststoff wird über die Förderverbindung der Mischvorrichtung, hier insbesondere einer Mischkammer der Mischvorrichtung, zugeführt. Die Feststoffzuführvorrichtung weist einen Schieber auf, der zwischen einer ersten Endposition und einer zweiten Endposition durch die Förderverbindung bewegt werden kann und dazu eingerichtet ist, Anhaftungen von Feststoff innerhalb der Förderverbindung zu lösen. Erfindungsgemäß wird der Schieber aktiviert und durch die Förderverbindung bewegt, um die Förderverbindung freizuräumen, sobald die Förderverbindung zwischen dem Feststoffauslass und dem Trichter verstopft ist.

Anhaftungen von Feststoff, die sich innerhalb der Förderverbindung der Feststoffzuführvorrichtung festsetzen können, lassen sich so besonders einfach und ohne eine Demontage der Förderverbindung entfernen.

Bei einer Ausführungsform des Verfahrens ist vorgesehen, den Feststoff mit Hilfe von Unterdruck in die Mischvorrichtung, hier insbesondere in eine Mischkammer der Mischvorrichtung, zu fördern, beispielsweise einzusaugen. Der Unterdruck, mit dem der Feststoff der Mischvorrichtung zugeführt werden kann, kann beispielsweise mit einer Rotor-Stator-Einheit der Mischvorrichtung erzeugt werden. Die Rotor-Stator-Einheit kann in einer, beispielsweise in der bereits zuvor erwähnten Mischkammer der Mischvorrichtung angeordnet sein.

Mit Hilfe des Unterdrucks kann der Feststoff durch die Förderverbindung der Feststoffzuführvorrichtung in die Mischkammer der Mischvorrichtung eingesaugt werden. Während der Zuführung des Feststoffes durch die Förderverbindung in die Mischkammer kann zwischen der Mischkammer der Mischvorrichtung und dem Trichter der Feststoffzuführvorrichtung eine durchgängige Druckverbindung geöffnet sein, die durch den Schieber nicht beeinträchtigt wird. Erst im Falle einer Verstopfung der Förderverbindung wird der Schieber aktiviert und zum Freiräumen der Förderverbindung durch die Förderverbindung bewegt.

Verstopfungen der Förderverbindung werden erfindungsgemäß mit einer Überwachungsvorrichtung detektiert. Die Überwachungsvorrichtung kann eine Überwachungsvorrichtung der Feststoffzuführvorrichtung sein. Die Überwachungsvorrichtung aktiviert den Schieber, insbesondere einen Schieberantrieb der Feststoffzuführvorrichtung, zumindest mittelbar, sobald eine Verstopfung der Förderverbindung detektiert wird. Auf diese Weise ist eine automatisierte Durchführung des Verfahrens möglich. Sobald eine Verstopfung der Förderverbindung von der Überwachungsvorrichtung festgestellt wird, kann diese den Schieber, insbesondere einen Schieberantrieb, automatisch zumindest mittelbar aktivieren, wodurch der Schieber durch die Förderverbindung bewegt wird, um etwaige Verstopfungen zu lösen und die Förderverbindung von Anhaftungen zu befreien.

Bei einer Ausführungsform des Verfahrens kann eine Verstopfung der Förderverbindung anhand eines Abfalls einer Leistungsaufnahme eines Antriebs der Rotor-Stator-Einheit der Mischvorrichtung detektiert werden. Ergänzend oder alternativ dazu ist es auch möglich, eine Verstopfung der Förderverbindung mit einem Überwachungssensor der Überwachungsvorrichtung zu detektieren. Bei einer Ausführungsform des Verfahrens wird eine Verstopfung der Förderverbindung anhand einer Druckänderung in der Mischvorrichtung, insbesondere anhand einer Druckänderung in der Mischkammer der Mischvorrichtung detektiert. Dazu kann beispielsweise ein Überwachungssensor in Form eines Drucksensors verwendet werden, der in der Mischkammer oder im Bereich der Mischkammer oder in der Förderverbindung angeordnet ist. Ist die Förderverbindung verstopft, kann mit dem Drucksensor ein Druckabfall registriert werden. Ein definierter Druckabfall, beispielsweise in der Mischkammer, kann auf eine Verstopfung der Förderverbindung hinweisen. Ein von einem entsprechenden Überwachungssensor generiertes Sensorsignal kann von der Überwachungsvorrichtung genutzt werden, den Schieber, insbesondere einen Schieberantrieb, zumindest mittelbar zu aktivieren, um den Schieber durch die Förderverbindung zu bewegen. So können die Förderverbindung bei Verstopfungen automatisiert freigeräumt und das Verfahren automatisiert durchgeführt werden.

Zur Lösung dieser Aufgabe wird ferner eine Feststoffzuführvorrichtung mit den Merkmalen des unabhängigen, auf eine solche Feststoffzuführvorrichtung gerichteten Anspruchs vorgeschlagen. Die Aufgabe wird somit insbesondere dadurch gelöst, dass die Feststoffzuführvorrichtung einen Schieber aufweist, der zwischen einer ersten Endposition und einer zweiten Endposition durch die Förderverbindung bewegbar ist.

Mithilfe des Schiebers können die zuvor beschriebenen Anhaftungen von Feststoff innerhalb der Förderverbindung zuverlässig vermieden und/oder gelöst werden. Sobald festgestellt wird, dass die Förderverbindung zwischen dem Feststoffauslass und dem Trichter der Feststoffzuführvorrichtung verstopft ist, kann der Schieber aktiviert und durch seine Bewegung zwischen den beiden Endpositionen zum Freiräumen der Förderverbindung verwendet werden. Um den Schieber zwischen seinen Endpositionen durch die Förderverbindung zu bewegen, kann ein Schieberantrieb der Feststoffzuführvorrichtung aktiviert werden.

In der ersten Endposition kann der Schieber die Förderverbindung freigeben, während er die Förderverbindung in der zweiten Endposition verschließen kann. Verschließt der Schieber die Förderverbindung, wird ein Feststoffvorrat innerhalb der Feststoffzuführvorrichtung von nachgelagerten Bereichen, insbesondere von einer Mischkammer einer mit der Feststoffzuführvorrichtung verbundenen Mischvorrichtung räumlich getrennt. So kann mit dem Schieber verhindert werden, dass der Feststoff mit einer in der Mischvorrichtung vorhandenen oder zirkulierenden Flüssigkeit in Kontakt gerät.

Der Trichter kann auch ganz allgemein und entsprechend seiner Funktion als Feststoffaufahmeelement der Feststoffzuführvorrichtung bezeichnet werden. Er dient dazu, Feststoff aus einem vorgelagerten Abschnitt, zum Beispiel aus einer Schütte und/oder aus einem Vorratssack aufzunehmen und den nachgelagerten Förderabschnitten der Förderzuführvorrichtung zuzuführen.

Besonders vorteilhaft ist es, wenn der Schieber einen lichten Querschnitt der Förderverbindung und/oder des Feststoffauslasses ausfüllt. Auf diese Weise ist es möglich, den gesamten lichten Querschnitt der Förderverbindung und/oder des Feststoffauslasses der Feststoffzuführvorrichtung mit dem Schieber zu erfassen und dort gegebenenfalls anhaftendes Material abzulösen.

Um sicherzustellen, dass die Förderverbindung und auch der Feststoffauslass vollständig mit dem Schieber erfasst werden können, ist es vorteilhaft, wenn der Schieber in seiner zweiten Endposition aus dem Feststoffauslass herausragt und/oder einen Überstand zu dem Feststoffauslass aufweist. Auf diese Weise kann selbst im Bereich des Feststoffauslasses anhaftendes Material sicher von dem Schieber erfasst und abgelöst werden.

Besonders vorteilhaft kann es sein, wenn der Überstand, den der Schieber in seiner zweiten Endposition zu dem Feststoffauslass aufweist, so groß wie eine Distanz zwischen einem Eintrittsquerschnitt in einen Feststoffeinlass und einem Mündungsquerschnitt des Feststoffeinlasses in eine Mischkammer einer mit der Feststoffzuführvorrichtung verbindbaren Mischvorrichtung ist.

Bei einer besonders vorteilhaften Ausführungsform der Feststoffzuführvorrichtung ist vorgesehen, dass der Schieber ein Kolben eines Kolbenventils ist. Dieses Kolbenventil kann dem Trichter in Förderrichtung des Feststoffs durch die Feststoffzuführvorrichtung nachgelagert sein.

Das Kolbenventil kann ein Gehäuse aufweisen, das zumindest einen Abschnitt der Förderverbindung zwischen dem Trichter und dem Feststoffauslass bildet. Besonders vorteilhaft ist es, wenn das Kolbenventil ein Gehäuse aufweist, das die gesamte Förderverbindung zwischen dem Trichter und dem Feststoffauslass bildet. Auch der Feststoffauslass kann an dem Gehäuse des zuvor erwähnten Kolbenventils angeordnet oder ausgebildet sein.

Der Trichter der Feststoffzuführvorrichtung kann einen Trichterauslass aufweisen, der in die Förderverbindung mündet. Wenn die Förderverbindung zumindest zum Teil von einem, beispielsweise dem bereits zuvor erwähnten, Gehäuse eines, beispielsweise des bereits zuvor erwähnten, Kolbenventils gebildet ist, kann der Trichterauslass auch direkt in das Gehäuse des Kolbenventils münden.

Dabei kann eine Einmündung des Trichterauslasses in das Gehäuse zwischen der ersten Endposition und der zweiten Endposition des Schiebers angeordnet sein. So gelangt der Feststoff auf direktem Wege aus dem Trichter in die Förderverbindung zwischen dem Trichter und dem Feststoffauslass der Feststoffzuführvorrichtung. Aufgrund der Anordnung der Einmündung des Trichterauslasses in das Gehäuse zwischen der ersten Endposition und der zweiten Endposition des Schiebers kann sichergestellt werden, dass der gesamte, mit Feststoff in Berührung kommende Bereich der Förderverbindung der Feststoffzuführvorrichtung zwischen dem Trichter und dem Feststoffauslass von dem Schieber erfasst und freigeräumt werden kann.

In einer weiteren Ausgestaltung der Erfindung ist der Trichterauslass innerhalb der Förderverbindung angeordnet und der Schieber ist durch die Einmündung hindurch bewegbar. In dieser Ausgestaltung ist der Trichterauslass ohne weitere Zwischenverbindungen direkt mit der Förderverbindung verbunden. Der Schieber ist durch den Trichterauslass hindurch zwischen der ersten und der zweiten Endposition bewegbar. Dadurch könne etwaige Pulverbrücken im Trichterauslass durch den Schieber ausgeräumt werden. Verstopfungen werden so vermieden. Des Weiteren ist der Feststoff, der sich vor der Zuführung zu der Förderverbindung in dem Trichter befindet, stets durch z.B. einen Rührflügel des Auflockerers bewegbar, so dass sich auch kurz vor dem Eintritt des Feststoffes in die Förderverbindung keine Pulverbrücken oder Verstopfungen bilden können. Es ist somit kein "Totraum" vorhanden, d.h. es gibt keine Stellen in der Feststoffzuführvorrichtung, die nicht von dem Auflockerer oder dem Schieber erreicht und somit mechanisch von Verstopfungen befreit werden könnten.

Um potentielle Anhaftungen von Feststoff in der gesamten Förderstrecke, die von der Feststoffzuführvorrichtung bereitgestellt wird, vermeiden oder lösen zu können, kann die Feststoffzuführvorrichtung ferner einen Feststoffauflockerer und/oder einen Fluidisator und/oder einen Vibrator und/oder einen Klopfer, insbesondere einen pneumatischen Klopfer, aufweisen. Diese zuvor erwähnten, zur Vermeidung und/oder Lösung von Anhaftungen vorgesehenen Funktionseinheiten der Feststoffzuführvorrichtung können insbesondere in oder an dem Trichter angeordnet oder ausgebildet sein.

Unter einem Fluidisator versteht man ein Funktionselement, das zur Auflockerung von Feststoff, insbesondere von Pulver verwendet wird. Dabei ist der Fluidisator dazu eingerichtet, Luft in ein Förderelement, zum Beispiel eine Rohrleitung und/oder den bereits zuvor erwähnten Trichter, der Feststoffzuführvorrichtung einzublasen, um dort vorhandenen Feststoff, insbesondere Pulver, aufzulockern und/oder zu lösen. Auf diese Weise kann der Feststoff, insbesondere das Pulver, derart aufgelockert werden, dass er/es leichter fließt und leichter durch die Feststoffzuführvorrichtung bewegt werden kann. Auch hierbei kann der zuvor erwähnte Fluidisator vorzugsweise im Bereich des Trichters der Feststoffzuführvorrichtung angeordnet oder ausgebildet sein.

Ferner können die mit dem zuzuführenden Feststoff in Kontakt tretenden Elemente der Feststoffzuführvorrichtung, also insbesondere der zuvor erwähnte Trichter sowie die zuvor erwähnte Förderverbindung und auch der Feststoffauslass der Feststoffzuführvorrichtung, mit einer Antihaftbeschichtung versehen sein oder aus Werkstoffen bestehen, die eine vergleichsweise geringe Anhaftwirkung auf zuzuführende Feststoffe aufweisen.

Die Feststoffzuführvorrichtung kann außerdem einen Schieberantrieb aufweisen. Der Schieberantrieb dient dazu, den Schieber zwischen der ersten Endposition und der zweiten Endposition hin und her zu bewegen. Dabei kann der Schieberantrieb ein pneumatischer und/oder elektrischer Schieberantrieb sein.

Besonders vorteilhaft ist es, wenn der zuvor erwähnte Schieberantrieb eine Spindel aufweist, mit der der Schieber zwischen der ersten Endposition und der zweiten Endposition verschiebbar ist. Die Verwendung einer Spindel hat den Vorteil, dass der Schieber mit vergleichsweise hoher und vor allem gleichmäßiger Kraft durch die Förderverbindung zwischen dem Feststoffauslass und dem Trichter hin und her bewegt werden kann. Auf diese Weise lassen sich auch hartnäckige Anhaftungen innerhalb der Förderverbindung lösen, die nur mit vergleichsweise hohem Kraftaufwand gelöst werden können.

Ferner ist es möglich, dass der Schieberantrieb ein Getriebe, insbesondere ein Untersetzungsgetriebe, aufweist, das mit einer, insbesondere der zuvor erwähnten, Spindel verbunden ist. Die Verwendung eines Untersetzungsgetriebes hat den Vorteil, dass die Kraft, mit der der Schieber durch die Förderverbindung bewegt werden kann, vergleichsweise einfach erhöht werden kann. So kann der Schieberantrieb entsprechend klein oder schwach dimensioniert sein, ohne dass es zu Krafteinbußen bei der Betätigung des Schiebers kommen muss.

Erfindungsgemäß weist die Feststoffzuführvorrichtung eine Überwachungsvorrichtung auf, die zur Detektion einer Verstopfung der Förderverbindung eingerichtet ist. Ferner kann die Feststoffzuführvorrichtung, insbesondere ihre Überwachungsvorrichtung, einen Überwachungssensor aufweisen, mit dem etwaige Verstopfungen der Förderverbindung zumindest mittelbar detektiert werden können. Der Überwachungssensor kann ein Drucksensor sein, der in Gebrauchsstellung beispielsweise in der Förderverbindung oder in einer Mischkammer der Mischvorrichtung, an die die Feststoffzuführvorrichtung angeschlossen ist, angeordnet sein kann.

Die zuvor erläuterte Feststoffzuführvorrichtung ist zur Durchführung des Verfahrens nach einem der auf ein Verfahren zur Zuführung von Feststoff zu einer Mischvorrichtung gerichteten Ansprüche eingerichtet.

Zur Lösung der Aufgabe wird auch eine Mischanordnung der eingangs genannten Art mit zumindest einer Mischvorrichtung und zumindest einer Feststoffzuführvorrichtung nach einem der auf eine solche Feststoffzuführvorrichtung gerichteten Ansprüche vorgeschlagen.

Die zumindest eine Mischvorrichtung kann eine Fest-Flüssig-Mischvorrichtung sein. Die Mischvorrichtung kann eine Rotor-Stator-Einheit aufweisen, die in einer Mischkammer der Mischvorrichtung angeordnet ist. Mit einer solchen Rotor-Stator-Einheit lassen sich Feststoffe besonders gründlich mit Flüssigkeiten vermischen. Außerdem kann beim Betrieb einer solchen Rotor-Stator-Einheit ein Sog entstehen, mit dem Feststoff aus der Feststoffzuführvorrichtung in die Mischkammer der Mischvorrichtung eingesaugt werden kann. Dies insbesondere dann, wenn die Förderverbindung der Feststoffzuführvorrichtung zur Mischvorrichtung bei in der ersten Endposition befindlichem Schieber freigegeben ist. Dies ist beispielsweise der Fall, wenn das zuvor beschriebene Kolbenventil geöffnet ist.

Die zumindest eine Mischvorrichtung kann einen Feststoffeinlass aufweisen, der mit dem Feststoffauslass der zumindest einen Feststoffzuführvorrichtung der Mischanordnung verbunden ist. Der Feststoffeinlass kann über einen Mündungsquerschnitt direkt in eine Mischkammer der Mischvorrichtung münden.

Der Schieber der zumindest einen Zuführvorrichtung kann in seiner zweiten Endposition den Mündungsquerschnitt ausfüllen und/oder aus dem Mündungsquerschnitt in die Mischkammer hineinragen. Auf diese Weise ist es möglich, den Feststoffeinlass der Mischvorrichtung, an den die Feststoffzuführvorrichtung angeschlossen ist, mithilfe des Schiebers der Feststoffzuführvorrichtung freizuräumen und dort möglicherweise anhaftenden Feststoff zu entfernen.

Ein Überstand, den der Schieber in seiner zweiten Endposition relativ zu dem Feststoffauslass der Feststoffzuführvorrichtung aufweist, kann zweckmäßigerweise so groß wie eine Distanz zwischen einem Eintrittsquerschnitt in den Feststoffeinlass und einem, beispielsweise dem bereits zuvor erwähnten Mündungsquerschnitt des Feststoffeinlasses in eine, beispielsweise in die bereits zuvor erwähnte Mischkammer sein. So wird sichergestellt, dass der Schieber in seiner zweiten Endposition bis in den Mündungsquerschnitt des Feststoffauslasses hineinreichen kann, um die gesamte Förderstrecke zwischen dem Trichter und der Mischkammer bei Bedarf freiräumen und auch verschließen zu können.

Auf diese Weise wird eine Mischanordnung geschaffen, bei der die Förderverbindung zwischen der Feststoffzuführvorrichtung und der Mischvorrichtung bei Bedarf während des Betriebs der Mischanordnung von Anhaftungen und Verstopfungen befreit werden kann. Dies erlaubt eine besonders effiziente Nutzung der Mischanordnung und hilft ungeplante Stillstände zu vermeiden.

Die zuvor erläuterte Mischanordnung kann zur Durchführung des Verfahrens zur Zuführung von Feststoff nach einem der auf ein solches gerichteten Ansprüche eingerichtet sein.

Die eingangs genannte Aufgabe wird schließlich auch durch eine Verwendung einer Feststoffzuführvorrichtung und/oder einer Mischanordnung nach einem der auf solche gerichteten Ansprüche bei der Durchführung des Verfahrens zur Zuführung von Feststoff nach einem der auf ein solches gerichteten Ansprüche gelöst.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen in zum Teil stark schematisierter Darstellung:
- Figur 1: eine Seitenansicht einer Mischanordnung mit einer Feststoffzuführvorrichtung und einer damit verbundenen Mischvorrichtung,
- Figur 2: eine entlang der Schnittlinie D bis D geschnittene Seitenansicht einer Förderverbindung zwischen einem Trichter und einem Feststoffauslass der Feststoffzuführvorrichtung, wobei sich ein Schieber der Feststoffzuführvorrichtung in seiner ersten Endposition befindet, sodass die Förderverbindung geöffnet ist, sowie
- Figur 3: eine geschnittene Seitenansicht der in Figur 2 gezeigten Förderverbindung mit in seiner zweiten Endposition befindlichem Schieber.

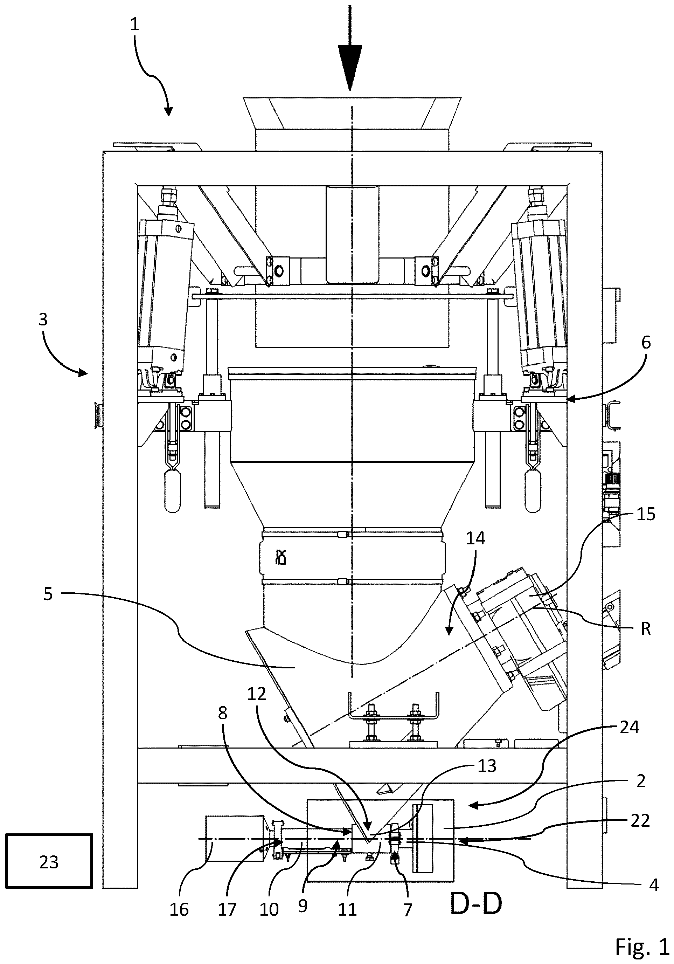

Die Figuren 1 bis 3 zeigen zumindest Teile einer im Ganzen mit 1 bezeichneten Mischanordnung zum Mischen von Feststoffen in Flüssigkeiten. Die Mischanordnung 1 umfasst eine Mischvorrichtung 2 und eine daran angeschlossene Feststoffzuführvorrichtung 3. Über die Feststoffzuführvorrichtung 3 kann der Mischvorrichtung 2 Feststoff, beispielsweise Pulver, zugeführt werden.

Die in den Figuren gezeigte Mischvorrichtung 2 ist eine Fest-Flüssig-Mischvorrichtung. Über einen nicht gezeigten Anschluss wird die Mischvorrichtung 2 mit Flüssigkeit versorgt, in die der Feststoff eingemischt werden soll. Die Mischvorrichtung 2 weist einen Feststoffeinlass 4 auf, an den die Feststoffzuführvorrichtung 3 angeschlossen ist. Die Feststoffzuführvorrichtung 3 dient dazu, der Mischvorrichtung 2 Feststoff, insbesondere Schüttgut, beispielsweise Pulver, zuzuführen.

Die Feststoffzuführvorrichtung 3 weist einen Trichter 5 auf. Der Trichter 5 dient der Aufnahme von Feststoff. Gemäß Figur 1 ist oberhalb des Trichters 5 eine Entleervorrichtung 6 angeordnet. Mithilfe dieser Entleervorrichtung 6 können Feststoffe aus Big-Bags in den Trichter 5 der Feststoffzuführvorrichtung 3 eingefüllt werden.

Die Feststoffzuführvorrichtung 3 weist ferner einen Feststoffauslass 7 auf, der mit dem bereits zuvor erwähnten Feststoffeinlass 4 der Mischvorrichtung 2 verbindbar und gemäß den Figuren 1 bis 3 verbunden ist.

Der Feststoffauslass 7 der Feststoffzuführvorrichtung 3 ist über eine Förderverbindung 8 mit dem Trichter 5 verbunden.

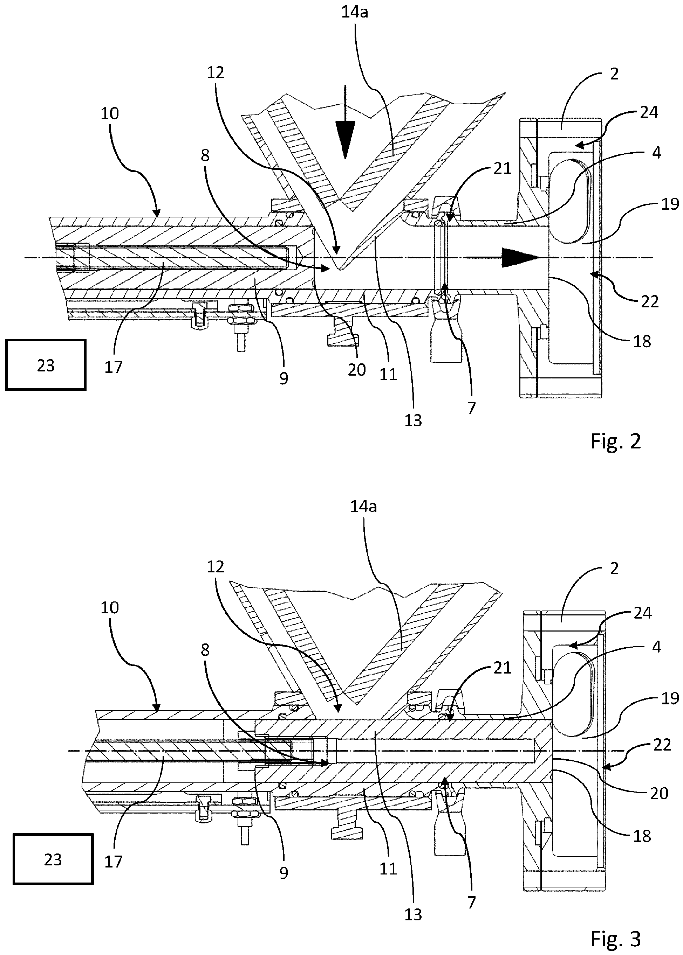

Die Feststoffzuführvorrichtung 3 weist einen Schieber 9 auf, der zwischen einer ersten Endposition (vgl. Figur 2) und einer zweiten Endposition (vgl. Figur 3) durch die Förderverbindung 8 bewegbar ist. Dabei ist der Abstand der beiden Endpositionen so gewählt, dass der Schieber 9 durch die gesamte Förderstrecke der Förderverbindung 8 bewegt werden kann.

Die Schnittdarstellungen der Figuren 2 und 3 verdeutlichen, dass der Schieber 9 einen lichten Querschnitt der Förderverbindung 8 und auch einen lichten Querschnitt des Feststoffauslasses 7 der Feststoffzuführvorrichtung 2 komplett ausfüllt. Gemäß Figur 3 ragt der Schieber 9 in seiner zweiten Endposition aus dem Feststoffauslass 7 der Feststoffzuführvorrichtung 2 heraus. Der Schieber 9 ist in seiner zweiten Endposition gemäß Figur 3 so weit aus dem Feststoffauslass 7 der Feststoffzuführvorrichtung 2 herausgeschoben, dass er in den Feststoffeinlass 4 der Mischvorrichtung 2 hineinragt und auch diesen vollständig ausfüllt.

Dabei ist ein Überstand, den der Schieber 9 in seiner zweiten Endposition zu dem Feststoffauslass 7 aufweist, so groß wie eine Distanz zwischen einem Eintrittsquerschnitt 21 in den Feststoffeinlass 4 und einem Mündungsquerschnitt 18 des Feststoffeinlasses 4 in eine Mischkammer 19 der mit der Feststoffzuführvorrichtung 3 verbundenen Mischvorrichtung 2.

Der Feststoffeinlass 4 der Mischvorrichtung 2 ist als Rohrstutzen ausgebildet.

Der Schieber 9 der Feststoffzuführvorrichtung 3 ist ein Kolben eines Kolbenventils 10. Das Kolbenventil 10 ist dem Trichter 5 der Feststoffzuführvorrichtung 3 in Förderrichtung des Feststoffs durch die Feststoffzuführvorrichtung 3 nachgelagert. Das Kolbenventil 10 weist ein Gehäuse 11 auf. Das Gehäuse 11 bildet nicht nur die gesamte Förderverbindung 8 zwischen dem Trichter 5 und dem Feststoffauslass 7 der Feststoffzuführvorrichtung 3, sondern weist auch noch den Feststoffauslass 7 auf.

Der Trichter 5 umfasst einen Trichterauslass 12, der direkt in das Gehäuse 11 des Kolbenventils 10 mündet. Eine Einmündung 13 des Trichterauslasses 12 in das Gehäuse 11 des Kolbenventils 10 ist dabei zwischen der ersten Endposition und der zweiten Endposition des Schiebers 9 angeordnet. Der Trichterauslass 12 ist innerhalb der Förderverbindung 8 angeordnet, d.h. innerhalb des Gehäuses 11. Die Einmündung 13 des Trichterauslasses 12 ist von dem Gehäuse 11 zumindest teilweise umschlossen. Der Schieber 9 ist durch die Einmündung 13 des Trichterauslasses 12 hindurch bewegbar. Das Gehäuse 11 ist dadurch direkt mit dem Trichter 5 verbunden.

Die Feststoffzuführvorrichtung 3 umfasst ferner einen Feststoffauflockerer 14, der innerhalb des Trichters 5 dafür sorgt, dass der darin befindliche Feststoff ausreichend locker und somit fließfähig bleibt. Der Feststoffauflockerer 14 weist einen Antrieb 15 auf. Über den Antrieb 15 können in den Figuren 2 und 3 im Schnitt dargestellte Flügel 14a des Feststoffauflockerers 14 innerhalb des Trichters 5 rotiert werden, um darin befindlichen Feststoff aufzulockern oder locker zu halten. Eine Rotationsachse R des Feststoffauflockerers 14 ist in Figur 1 angedeutet.

Die Feststoffzuführvorrichtung 3 weist einen Schieberantrieb 16 auf. Der Schieberantrieb 16 kann beispielsweise als pneumatischer oder auch als elektrischer Schieberantrieb ausgebildet sein. Insbesondere für Anwendungen im Lebensmittel- und/oder Pharmabereich eignen sich pneumatische oder elektrische Schieberantriebe aufgrund der dort gegebenen hygienischen Anforderungen besonders. Denkbar wäre grundsätzlich auch die Verwendung hydraulischer Schieberantriebe.

Der Schieberantrieb 16 ist über eine Spindel 17 mit dem Schieber 9 verbunden. Mithilfe der Spindel 17 kann der Schieber 9 zwischen der ersten Endposition und der zweiten Endposition hin und her bewegt werden. Der Schieberantrieb 16 kann ferner ein in den Figuren nicht gezeigtes Getriebe aufweisen, das vorzugsweise als Untersetzungsgetriebe ausgebildet sein kann. Über das Getriebe ist der Schieberantrieb 16 dann mit der Spindel 17 verbunden.

Die Schnittdarstellungen der Figuren 2 und 3 verdeutlichen, dass der Feststoffauslass 7 der Feststoffzuführvorrichtung 3 mit dem Feststoffeinlass 4 der Mischvorrichtung 2 verbunden ist. Der Feststoffeinlass 4 weist einen Mündungsquerschnitt 18 direkt in eine Mischkammer 19 der Mischvorrichtung 2 auf. Über diesen Mündungsquerschnitt 18 kann über den Feststoffeinlass 4 zugeführter Feststoff direkt in die Mischkammer 19 der Mischvorrichtung 2 eingebracht werden. Der Schieber 9 der Feststoffzuführvorrichtung 3 reicht in seiner zweiten Endposition bis in den Mündungsquerschnitt 18 des Feststoffeinlasses 4 der Mischvorrichtung 2 und füllt diesen komplett aus (vgl. Figur 3). Eine Stirnseite 20 des Schiebers 9 verschließt den Mündungsquerschnitt 18 des Feststoffeinlasses 4 wandbündig, wenn der Schieber 9 seine zweite Endposition gemäß Figur 3 erreicht hat. Auf diese Weise ist sichergestellt, dass die komplette Förderstrecke, die von der Förderverbindung 8, dem Feststoffauslass 7 und dem Feststoffeinlass 4 bereitgestellt wird, von dem Schieber 9 erfasst und bei Bedarf von Anhaftungen befreit werden kann.

Figur 3 verdeutlicht, dass ein Überstand, den der Schiebers 9 in seiner zweiten Endposition relativ zu dem Feststoffauslass 7 aufweist, so groß wie eine Distanz zwischen einem Eintrittsquerschnitt 21 in den Feststoffeinlass 4 und dem Mündungsquerschnitt 18 des Feststoffeinlasses 4 in die Mischkammer 19 ist.

Die Feststoffzuführvorrichtung 3 weist eine Überwachungsvorrichtung 23 auf. Die Überwachungsvorrichtung 23 ist zur Detektion einer Verstopfung der Förderverbindung 8 eingerichtet. Die Überwachungsvorrichtung 23 kann bei einer Ausführungsform der Feststoffzuführvorrichtung 3 mit einem Überwachungssensor 24 in Form eines Drucksensors verbunden sein. Der Überwachungssensor 24 kann in der Mischkammer 19 der Mischvorrichtung 2 oder auch in der Förderverbindung 8 angeordnet sein. Die Rotor-Stator-Einheit 22 der Mischvorrichtung 2 ist zur Erzeugung eines Unterdrucks in der Mischkammer 19 eingerichtet. Durch den Unterdruck wird der Feststoff durch die Förderverbindung 8 der Feststoffzuführvorrichtung 3 in die Mischkammer 19 der Mischvorrichtung 2 eingefördert. Sobald die Förderverbindung 8 durch Anhaftungen von Feststoff verstopft ist, kann der Überwachungssensor 24 einen Druckabfall in der Mischkammer 19 bzw. in der Förderverbindung 8 detektieren.

Ferner kann die Überwachungsvorrichtung 23 auch eine Leistungsaufnahme eines Antriebs der Rotor-Stator-Einheit 22 überwachen. Ist ein Abfall der Leistungsaufnahme des Antriebs zu detektieren, kann dies auf eine Verstopfung der Förderverbindung 8 hinweisen und der Schieber 9 aktiviert werden.

Die Mischanordnung 1 und die Feststoffzuführvorrichtung 3 sind zur Durchführung des nachfolgend beschriebenen Verfahrens eingerichtet:
Hierbei wird unter Verwendung der Feststoffzuführvorrichtung 3 Feststoff, beispielsweise Schüttgut in Form eines Pulvers, der Mischvorrichtung 2 zugeführt. Dabei gelangt der Feststoff über die Förderverbindung 8 der Feststoffzuführvorrichtung 3 in die Mischvorrichtung 2 und hier insbesondere in die Mischkammer 19 der Mischvorrichtung 2. Die Feststoffzuführvorrichtung 3 weist, wie bereits zuvor ausgeführt wurde, den Schieber 9 auf. Dieser kann zwischen seiner ersten Endposition und seiner zweiten Endposition durch die Förderverbindung 8 bewegt werden und ist dazu eingerichtet, Anhaftungen von Feststoff innerhalb der Förderverbindung 8 zu lösen. Der Schieber 9 wird aktiviert und durch die Förderverbindung 8 bewegt, um die Förderverbindung 8 freizuräumen, sobald die Förderverbindung 8 zwischen dem Feststoffauslass 7 und dem Trichter 5 verstopft ist. Um den Schieber 9 durch die Förderverbindung 8 zu bewegen, wird der Schieberantrieb 16 angesteuert und entsprechend aktiviert.

Der Feststoff wird bei der in den Figuren gezeigten Mischanordnung 1 mit Hilfe von Unterdruck in die Mischkammer 19 der Mischvorrichtung 2 gefördert, nämlich eingesaugt. Der Unterdruck, mit dem der Feststoff eingesaugt wird, wird mit Hilfe der Rotor-Stator-Einheit 22 der Mischvorrichtung 2 erzeugt. Die Förderverbindung 8 wird mit der Überwachungsvorrichtung 23 der Feststoffzuführvorrichtung 3 auf Verstopfungen hin überwacht. Die Überwachungsvorrichtung 23 aktiviert den Schieber 9 zumindest mittelbar, sobald eine Verstopfung der Förderverbindung 8 detektiert wird. Auf diese weise kann das Verfahren automatisiert durchgeführt werden.

Die Verstopfung der Förderverbindung 8 kann beispielsweise anhand eines Abfalls einer Leistungsaufnahme eines Antriebs der Rotor-Stator-Einheit 22 detektiert werden. Es ist auch möglich, die Verstopfung der Förderverbindung 8 anhand einer Druckänderung in der Förderverbindung 8 und/oder in der Mischkammer 19 der Mischvorrichtung 2 zu detektieren. Hierfür können ein oder mehrere, beispielsweise als Drucksensoren ausgebildete Überwachungssensoren 24 der Überwachungsvorrichtung 23 verwendet werden.

Die Erfindung befasst sich mit Verbesserungen auf dem technischen Gebiet der Zuführung von Feststoffen zu Mischvorrichtungen. Hierfür wird unter anderem die Feststoffzuführvorrichtung 3 vorgeschlagen. Diese weist den Schieber 9 auf, der zwischen einer ersten Endposition und einer zweiten Endposition durch eine Förderverbindung 8 bewegt werden kann, die zwischen einem Trichter 5 und einem Feststoffauslass 7 der Feststoffzuführvorrichtung 3 angeordnet ist. Mithilfe des Schiebers 9 lassen sich Anhaftungen innerhalb der Förderverbindung 8 lösen, ohne dass eine Demontage der Förderverbindung 8 notwendig wäre.

### Bezugszeichenliste

- 1: Mischanordnung
- 2: Mischvorrichtung
- 3: Feststoffzuführvorrichtung
- 4: Feststoffeinlass
- 5: Trichter
- 6: Entleervorrichtung
- 7: Feststoffauslass
- 8: Förderverbindung
- 9: Schieber
- 10: Kolbenventil
- 11: Gehäuse
- 12: Trichterauslass
- 13: Einmündung
- 14: Feststoffauflockerer
- 14a: Flügel von 14
- 15: Antrieb von 14
- 16: Schieberantrieb
- 17: Spindel
- 18: Mündungsquerschnitt
- 19: Mischkammer
- 20: Stirnseite von 9
- 21: Eintrittsquerschnitt von 4
- 22: Rotor-Stator-Einheit
- 23: Überwachungsvorrichtung
- 24: Überwachungssensor
- R: Rotationsachse von 14

## Patentansprüche

1. Verfahren zur Zuführung von Feststoff, insbesondere von Schüttgut, wie zum Beispiel Pulver, zu einer Mischvorrichtung (2) unter Verwendung einer Feststoffzuführvorrichtung (3), wobei die Feststoffzuführvorrichtung (3) einen Trichter (5) zur Aufnahme von Feststoff und einen Feststoffauslass (7) aufweist, der mit einem Feststoffeinlass (4) der Mischvorrichtung (2) verbunden ist, wobei der Feststoffauslass (7) und der Trichter (5) über eine Förderverbindung (8) miteinander verbunden sind, wobei der Feststoff über die Förderverbindung (8) der Mischvorrichtung (2) zugeführt wird, wobei die Feststoffzuführvorrichtung (3) einen Schieber (9) aufweist, der zwischen einer ersten Endposition und einer zweiten Endposition durch die Förderverbindung (8) bewegbar ist, und dass der Schieber (9) dazu eingerichtet ist, Anhaftungen von Feststoff innerhalb der Förderverbindung (8) zu lösen, **dadurch gekennzeichnet, dass** der Schieber (9) aktiviert und durch die Förderverbindung (8) bewegt wird, um die Förderverbindung (8) freizuräumen, sobald die Förderverbindung (8) zwischen dem Feststoffauslass (7) und dem Trichter (5) verstopft ist, wobei eine Verstopfung der Förderverbindung (8) mit einer Überwachungsvorrichtung (23) detektiert wird, und wobei die Überwachungsvorrichtung (23) den Schieber (9) zumindest mittelbar aktiviert, sobald eine Verstopfung der Förderverbindung (8) detektiert wird.

2. Verfahren nach Anspruch 1, wobei der Feststoff mithilfe von Unterdruck in die Mischvorrichtung (2), insbesondere in eine Mischkammer (19) der Mischvorrichtung (2), gefördert, insbesondere eingesaugt wird, vorzugsweise wobei der Unterdruck mit einer Rotor-Stator-Einheit (22) der Mischvorrichtung (2) erzeugt wird.

3. Verfahren nach Anspruch 2, wobei eine Verstopfung der Förderverbindung (8) anhand eines Abfalls einer Leistungsaufnahme eines Antriebs der Rotor-Stator-Einheit (22) und/oder, insbesondere mit einem Überwachungssensor (24), beispielsweise mit einem Drucksensor anhand einer Druckänderung in der Förderverbindung (8) und/oder in der Mischvorrichtung (2), insbesondere in der Mischkammer (19) der Mischvorrichtung (2), detektiert wird.

4. Feststoffzuführvorrichtung (3) zum Zuführen von Feststoff, insbesondere von Schüttgut, wie zum Beispiel Pulver, zu einer Mischvorrichtung (2), wobei die Feststoffzuführvorrichtung (3) einen Trichter (5) zur Aufnahme von Feststoff und einen Feststoffauslass (7) aufweist, der mit einem Feststoffeinlass (4) einer Mischvorrichtung (2) verbindbar ist, wobei der Feststoffauslass (7) und der Trichter (5) über eine Förderverbindung (8) miteinander verbunden sind, die Feststoffzuführvorrichtung (3) einen Schieber (9) aufweist, der zwischen einer ersten Endposition und einer zweiten Endposition durch die Förderverbindung (8) bewegbar ist, **dadurch gekennzeichnet, dass** die Feststoffzuführvorrichtung (3) zur Durchführung des Verfahrens nach einem der vorherigen Ansprüche eingerichtet ist und eine Überwachungsvorrichtung (23) aufweist, die zur Detektion einer Verstopfung der Förderverbindung (8) und zur zumindest mittelbaren Aktivierung des Schiebers (9) eingerichtet ist.

5. Feststoffzuführvorrichtung (3) nach dem vorherigen Anspruch, **dadurch gekennzeichnet, dass** der Schieber (9) einen lichten Querschnitt der Förderverbindung (8) und/oder des Feststoffauslasses (7) ausfüllt, und/oder dass der Schieber (9) in seiner zweiten Endposition aus dem Feststoffauslass (7) herausragt und/oder einen Überstand zu dem Feststoffauslass (7) aufweist, insbesondere wobei der Überstand, den der Schieber (9) in seiner zweiten Endposition zu dem Feststoffauslass (7) aufweist, so groß wie eine Distanz zwischen einem Eintrittsquerschnitt (21) in einen Feststoffeinlass (4) und einem Mündungsquerschnitt (18) des Feststoffeinlasses (4) in eine Mischkammer (19) einer mit der Feststoffzuführvorrichtung (3) verbindbaren Mischvorrichtung (2) ist.

6. Feststoffzuführvorrichtung (3) nach einem der Ansprüche 4 oder 5, **dadurch gekennzeichnet, dass** der Schieber (9) ein Kolben eines Kolbenventils (10) ist, das dem Trichter (5) in Förderrichtung des Feststoffs durch die Feststoffzuführvorrichtung (3) nachgelagert ist.

7. Feststoffzuführvorrichtung (3) nach einem der Ansprüche 4 bis 6, **dadurch gekennzeichnet, dass** der Trichter (5) einen Trichterauslass (12) aufweist, der in die Förderverbindung (8), insbesondere in das Gehäuse (11) des Kolbenventils (10), mündet, vorzugsweise wobei eine Einmündung (13) des Trichterauslasses (12) in das Gehäuse (11) zwischen der ersten Endposition und der zweiten Endposition des Schiebers (9) angeordnet ist.

8. Feststoffzuführvorrichtung (3) nach einem der Ansprüche 4 bis 7, **dadurch gekennzeichnet, dass** der Trichterauslass (12) innerhalb der Förderverbindung (8) angeordnet ist und der Schieber (9) durch die Einmündung (13) des Trichterauslasses (12) hindurch bewegbar ist, und/oder dass die Feststoffzuführvorrichtung (3), insbesondere in oder an dem Trichter, einen Feststoffauflockerer (14) und/oder einen Fluidisator und/oder einen Vibrator und/oder einen Klopfer aufweist.

9. Feststoffzuführvorrichtung (3) nach einem der Ansprüche 4 bis 8, **dadurch gekennzeichnet, dass** die Feststoffzuführvorrichtung (3) einen Überwachungssensor (24), insbesondere einen Überwachungssensor (24), beispielsweise einen Drucksensor, aufweist und/oder mit einem Überwachungssensor (24), beispielsweise einen Drucksensor, verbunden ist.

10. Mischanordnung (1) umfassend zumindest eine Mischvorrichtung (2) und zumindest eine Feststoffzuführvorrichtung (3) nach einem der Ansprüche 4 bis 9.

11. Mischanordnung (1) nach dem vorherigen Anspruch, wobei die Mischvorrichtung (2) eine Fest-Flüssig-Mischvorrichtung ist, insbesondere die eine Rotor-Stator-Einheit (22) aufweist, die in einer Mischkammer (19) der Mischvorrichtung (2) angeordnet ist, insbesondere wobei die Rotor-Stator-Einheit (22) zur Erzeugung eines Unterdrucks in der Mischkammer (19) eingerichtet ist, mit dem der Feststoff durch die Förderverbindung (8) der Feststoffzuführvorrichtung (3) in die Mischvorrichtung (3), insbesondere in eine Mischkammer (19) der Mischvorrichtung (3) förderbar ist.

12. Mischanordnung (1) nach einem der Ansprüche 10 oder 11, wobei die zumindest eine Mischvorrichtung (2) einen Feststoffeinlass (4) aufweist, der mit dem Feststoffauslass (7) der zumindest einen Feststoffzuführvorrichtung (3) verbunden ist, wobei der Feststoffeinlass (4) über einen Mündungsquerschnitt (18) in eine Mischkammer (19) der Mischvorrichtung (2) mündet, und wobei der Schieber (9) der Feststoffzuführvorrichtung (3) in seiner zweiten Endposition den Mündungsquerschnitt (18) ausfüllt und/oder aus dem Mündungsquerschnitt in die Mischkammer (19) ragt.

13. Mischanordnung (1) nach einem der Ansprüche 10 bis 12, wobei ein Überstand, den der Schieber (9) in seiner zweiten Endposition relativ zu dem Feststoffauslass (7) der Feststoffzuführvorrichtung (3) aufweist, so groß wie eine Distanz zwischen einem Eintrittsquerschnitt (21) in den Feststoffeinlass (4) und einem oder dem Mündungsquerschnitt (18) des Feststoffeinlasses (4) in eine oder die Mischkammer (19) ist.

14. Mischanordnung (1) nach einem der Ansprüche 10 bis 13, **dadurch gekennzeichnet, dass** die Mischanordnung (1) zur Durchführung des Verfahrens nach einem der vorherigen Ansprüche eingerichtet ist.

15. Verwendung einer Feststoffzuführvorrichtung (3) nach einem der Ansprüche 4 bis 9 und/oder einer Mischanordnung (1) nach einem der Ansprüche 10 bis 14 bei der Durchführung des Verfahrens nach einem der vorherigen Ansprüche.

## Claims

1. Method for feeding a solid material, in particular bulk material such as, for example, powder, to a mixing apparatus (2) with the use of a solid material feeding apparatus (3), the solid material feeding apparatus (3) having a hopper (5) for receiving solid material and a solid material outlet (7) which is connected to a solid material inlet (4) of the mixing apparatus (2), the solid material outlet (7) and the hopper (5) being connected to one another via a conveying connection (8), the solid material being fed to the mixing apparatus (2) via the conveying connection (8), the solid material feeding apparatus (3) having a slide (9) which can be moved through the conveying connection (8) between a first end position and a second end position, and the slide (9) being configured to detach adherences of solid material within the conveying connection (8), **characterized in that** the slide (9) is activated and is moved through the conveying connection (8) in order to clear the conveying connection (8) as soon as the conveying connection (8) between the solid material outlet (7) and the hopper (5) is blocked, a blockage of the conveying connection (8) being detected by way of a monitoring apparatus (23), and the monitoring apparatus (23) activating the slide (9) at least indirectly as soon as a blockage of the conveying connection (8) is detected.

2. Method according to Claim 1, the solid material being conveyed, in particular being sucked, with the aid of vacuum into the mixing apparatus (2), in particular into a mixing chamber (19) of the mixing apparatus (2), the vacuum preferably being generated by way of a rotor/stator unit (22) of the mixing apparatus (2).

3. Method according to Claim 2, a blockage of the conveying connection (8) being detected on the basis of a drop in a power consumption of a drive of the rotor/stator unit (22), and/or, in particular, by way of a monitoring sensor (24), for example by way of a pressure sensor on the basis of a pressure change in the conveying connection (8) and/or in the mixing apparatus (2), in particular in the mixing chamber (19) of the mixing apparatus (2).

4. Solid material feeding apparatus (3) for feeding solid material, in particular bulk material such as, for example, powder, to a mixing apparatus (2), the solid material feeding apparatus (3) having a hopper (5) for receiving solid material and a solid material outlet (7) which can be connected to a solid material inlet (4) of the mixing apparatus (2), the solid material outlet (7) and the hopper (5) being connected to one another via a connecting connection (8), the solid material feeding apparatus (3) having a slide (9) which can be moved through the conveying connection (8) between a first end position and a second end position, **characterized in that** the solid material feeding apparatus (3) is configured to carry out the method according to one of the preceding claims and has a monitoring apparatus (23) which is configured for the detection of a blockage of the conveying connection (8) and for the at least indirect activation of the slide (9).

5. Solid material feeding apparatus (3) according to the preceding claim, **characterized in that** the slide (9) fills the clear cross section of the conveying connection (8) and/or the solid material outlet (7), and/or **in that** the slide (9) protrudes out of the solid material outlet (7) in its second end position and/or has an overhang with respect to the solid material outlet (7), the overhang which the slide (9) has in its second end position with respect to the solid material outlet (7) being, in particular, as great as a distance between an inlet cross section (21) into a solid material inlet (4) and an orifice cross section (18) of the solid material inlet (4) into a mixing chamber (19) of a mixing apparatus (2) which can be connected to the solid material feeding apparatus (3).

6. Solid material feeding apparatus (3) according to either of Claims 4 or 5, **characterized in that** the slide (9) is a piston of a piston valve (10) which is mounted downstream of the hopper (5) in the conveying direction of the solid material through the solid material feeding apparatus (3).

7. Solid material feeding apparatus (3) according to one of Claims 4 to 6, **characterized in that** the hopper (5) has a hopper outlet (12) which opens into the conveying connection (8), in particular into the housing (11) of the piston valve (10), an orifice (13) of the hopper outlet (12) into the housing (11) preferably being arranged between the first end position and the second end position of the slide (9).

8. Solid material feeding apparatus (3) according to one of Claims 4 to 7, **characterized in that** the hopper outlet (12) is arranged within the conveying connection (8), and the slide (9) can be moved through the orifice (13) of the hopper outlet (12), and/or **in that** the solid material feeding apparatus (3) has, in particular in or on the hopper, a solid material scarifier (14) and/or a fluidizer and/or a vibrator and/or a knocker.

9. Solid material feeding apparatus (3) according to one of Claims 4 to 8, **characterized in that** the solid material feeding apparatus (3) has a monitoring sensor (24), in particular a monitoring sensor (24), for example a pressure sensor, and/or is connected to a monitoring sensor (24), for example a pressure sensor.

10. Mixing arrangement (1) comprising at least one mixing apparatus (2) and at least one solid material feeding apparatus (3) according to one of Claims 4 to 9.

11. Mixing arrangement (1) according to the preceding claim, the mixing apparatus (2) being a solid/liquid mixing apparatus, in particular which has a rotor/stator unit (22) which is arranged in a mixing chamber (19) of the mixing apparatus (2), the rotor/stator unit (22) being configured, in particular, for the generation of a vacuum in the mixing chamber (19), by way of which vacuum the solid material can be conveyed through the conveying connection (8) of the solid material feeding apparatus (3) into the mixing apparatus (3), in particular into a mixing chamber (19) of the mixing apparatus (3).

12. Mixing arrangement (1) according to either of Claims 10 or 11, the at least one mixing apparatus (2) having a solid material inlet (4) which is connected to the solid material outlet (7) of the at least one solid material feeding apparatus (3), the solid material inlet (4) opening via an orifice cross section (18) into a mixing chamber (19) of the mixing apparatus (2), and the slide (9) of the solid material feeding apparatus (3) filling the orifice cross section (18) in its second end position and/or protruding out of the orifice cross section into the mixing chamber (19).

13. Mixing arrangement (1) according to one of Claims 10 to 12, an overhang which the slide (9) has, in its second end position, relative to the solid material outlet (7) of the solid material feeding apparatus (3) being as great as a distance between an inlet cross section (21) into the solid material inlet (4) and an or the orifice cross-section (18) of the solid material inlet (4) into a or the mixing chamber (19).

14. Mixing arrangement (1) according to one of Claims 10 to 13, **characterized in that** the mixing apparatus (1) is configured to carry out the method according to one of the preceding claims.

15. Use of a solid material feeding apparatus (3) according to one of Claims 4 to 9 and/or a mixing arrangement (1) according to one of Claims 10 to 14 when carrying out the method according to one of the preceding claims.

## Revendications

1. Procédé d'alimentation de matières solides, en particulier de solides en vrac, tels que de la poudre, à un dispositif de mélange (2) en utilisant un dispositif d'alimentation de matières solides (3), dans lequel le dispositif d'alimentation de matières solides (3) comprend une trémie (5) pour recevoir des matières solides et une sortie de matières solides (7), qui est reliée à une entrée de matières solides (4) du dispositif de mélange (2), la sortie de matières solides (7) et la trémie (5) étant reliées l'une à l'autre par l'intermédiaire d'une liaison de transport (8), les matières solides étant amenées au dispositif de mélange (2) par l'intermédiaire de la liaison de transport (8), le dispositif d'alimentation de matières solides (3) comportant un poussoir (9) mobile entre une première position d'extrémité et une deuxième position d'extrémité à travers la liaison de transport (8), et où le poussoir (9) est agencé pour libérer des adhérences de matière solide à l'intérieur de la liaison de transport (8), **caractérisé en ce que** le poussoir (9) est activé et déplacé à travers la liaison de transport (8) afin de dégager la liaison de transport (8), dès que la liaison de transport (8) est obstruée entre la sortie de matières solides (7) et la trémie (5), une obstruction de la liaison de transport (8) étant détectée avec un dispositif de surveillance (23), lequel dispositif de surveillance (23) activant au moins indirectement le poussoir (9) dès qu'une obstruction de la liaison de transport (8) est détectée.

2. Procédé selon la revendication 1, dans lequel la matière solide est transportée, en particulier aspirée, à l'aide d'une dépression dans le dispositif de mélange (2), en particulier dans une chambre de mélange (19) du dispositif de mélange (2), et dans lequel la dépression est de préférence générée à l'aide d'un ensemble rotor-stator (22) du dispositif de mélange (2).

3. Procédé selon la revendication 2, dans lequel une obstruction de la liaison de transport (8) est détectée à l'aide d'une chute de la puissance absorbée de l'entraînement de l'unité rotor-stator 22) et/ou, en particulier, à l'aide d'un capteur de surveillance (24), par exemple un capteur de pression, détectant une variation de pression dans la liaison de transport (8) et/ou dans le dispositif de mélange (2), en particulier dans la chambre de mélange (19) du dispositif de mélange (2).

4. Dispositif d'alimentation de matières solides, en particulier de solides en vrac, tels que de la poudre, à un dispositif de mélange (2) en utilisant un dispositif d'alimentation de matières solides (3), dans lequel le dispositif d'alimentation de matières solides (3) comprend une trémie (5) pour recevoir des matières solides et une sortie de matières solides (7), qui est reliée à une entrée de matières solides (4) du dispositif de mélange (2), la sortie de matières solides (7) et la trémie (5) étant reliées l'une à l'autre par l'intermédiaire d'une liaison de transport (8), les matières solides étant amenées au dispositif de mélange (2) par l'intermédiaire de la liaison de transport (8), le dispositif d'alimentation de matières solides (3) comportant un poussoir (9) mobile entre une première position d'extrémité et une deuxième position d'extrémité à travers la liaison de transport (8),**caractérisé en ce que** le dispositif d'alimentation de matières solides (3) est agencé pour mettre en oeuvre le procédé selon l'une des revendications précédentes et qu'il comporte un dispositif de surveillance (23) agencé pour détecter une obstruction de la liaison de transport (8) et pour activer au moins indirectement le poussoir (9).

5. Dispositif d'alimentation de matières solides (3) selon la revendication précédente, **caractérisé en ce que** le poussoir (9) remplit la section libre de la liaison de transport (8) et/ou de la sortie de matières solides (7), et/ou **en ce que** le poussoir (9), dans sa deuxième position extrême, fait saillie hors de la sortie de matières solides (7) et/ou présente un débord par rapport à la sortie de matières solides (7), et dans lequel, en particulier, le dépassement que présente le poussoir (9) dans sa deuxième position extrême par rapport à la sortie de matières solides (7) est aussi grand que la distance entre une section transversale d'entrée (21) de l'alimentation de matières solides (4) et une section transversale d'embouchure (18) de l'alimentation de matières solides (4) dans la chambre de mélange (19) du dispositif de mélange (2) pouvant être relié au dispositif d'alimentation en matières solides (3).

6. Dispositif d'alimentation de matières solides (3) selon l'une des revendications 4 ou 5, **caractérisé en ce que** le poussoir (9) est un piston d'une valve à piston (10) située en aval de la trémie (5) dans le sens de transport des matières solides à travers le dispositif d'alimentation de matières solides (3).

7. Dispositif d'alimentation de matières solides (3) selon l'une des revendications 4 ou 5, **caractérisé en ce que** la trémie (5) comporte une sortie de trémie (12) débouchant dans la liaison de transport (8), notamment dans le boîtier (11) de la valve à piston (10), dans lequel boîtier (11) une embouchure (13) de la sortie de trémie (12) est agencée de préférence entre la première position d'extrémité et la deuxième position d'extrémité du poussoir (9).

8. Dispositif d'alimentation de matières solides (3) selon l'une des revendications 4 à 7, **caractérisé en ce que** la sortie de trémie (12) est agencée au sein de la liaison de transport (8) et que le poussoir (9) est mobile à travers l'embouchure (13) de la sortie de trémie (12), et/ou **en ce que** le dispositif d'alimentation de matières solides (3) comporte, notamment dans ou sur la trémie, un ameublisseur de matières solides (14) et/ou un fluidificateur et/ou un vibrateur et/ou un cogneur.

9. Dispositif d'alimentation de matières solides (3) selon l'une des revendications 4 à 8, **caractérisé en ce que** le dispositif d'alimentation de matières solides (3) comporte notamment un capteur de surveillance (24), par exemple un capteur de pression, et/ou qu'il est relié à un capteur de surveillance (24), par exemple un capteur de pression.

10. Ensemble de mélange (1) comprenant au moins un dispositif de mélange (2) et au moins un dispositif d'alimentation de matières solides (3) selon l'une quelconque des revendications 4 à 9.

11. Ensemble de mélange (1) selon la revendication précédente, dans lequel le dispositif de mélange (2) est un dispositif de mélange solide-liquide, comportant notamment une unité rotor-stator (22) disposée dans une chambre de mélange (19) du dispositif de mélange (2), en particulier dans lequel l'unité rotor-stator (22) est agencée pour générer une dépression dans la chambre de mélange (19), à l'aide de laquelle la matière solide peut être transportée par la liaison de transport (8) du dispositif d'alimentation en matières solides (3) dans le dispositif de mélange (3), en particulier dans une chambre de mélange (19) du dispositif de mélange (3).

12. Ensemble de mélange (1) selon l'une des revendications 10 ou 11, dans lequel au moins un dispositif de mélange (2) comprend une entrée de matières solides (4) reliée à la sortie de matières solides (7) dudit dispositif d'alimentation de matières solides (3), dans lequel l'entrée de matières solides (4) débouche par une section d'embouchure (18) dans une chambre de mélange (19) du dispositif de mélange (2), et dans lequel le poussoir (9) du dispositif d'alimentation en matières solides (3), dans sa deuxième position d'extrémité, remplit la section d'embouchure (18) et/ou fait saillie de la section d'embouchure dans la chambre de mélange (19).

13. Ensemble de mélange (1) selon l'une quelconque des revendications 10 à 12, dans lequel un débord que présente le poussoir (9) dans sa deuxième position extrême par rapport à la sortie de matières solides (7) du dispositif d'alimentation de matières solides (3) est aussi grand que la distance entre une section transversale d'entrée (21) du dispositif d'alimentation de matières solides (4) et une ou la section transversale d'embouchure (18) de l'entrée de matières solides (4) dans une ou la chambre de mélange (19).

14. Ensemble de mélange (1) selon l'une des revendications 10 à 13, **caractérisé en ce que** l'ensemble de mélange (1) est agencé pour mettre en oeuvre le procédé selon l'une des revendications précédentes.

15. Utilisation d'un dispositif d'alimentation de matières solides (3) selon l'une des revendications 4 à 9 et/ou d'un ensemble de mélange (1) selon l'une des revendications 10 à 14 dans la mise en oeuvre du procédé selon l'une des revendications précédentes.
